# EUROPEAN PATENT APPLICATION

(11) **EP 3 075 276 A1**
(43) Date of publication of application: **05.10.2016**
(21) Application number: 16161542.2
(22) Date of filing: 22.03.2016
(51) Int. Cl.: A41D 27/24, A41H 43/04, B29C 65/48, B29C 65/00, D06H 5/00

(54) **BONDING DEVICE AND BONDING DEVICE CONTROL METHOD**

(30) Priority: 31.03.2015 JP 2015070798
(71) Applicant: Brother Kogyo Kabushiki Kaisha, Nagoya, Aichi 467-8561 (JP)
(72) Inventor: SANO, Toshiyuki, Nagoya Aichi 467-8562 (JP); IWAKOSHI, Hiroyasu, Nagoya Aichi 467-8562 (JP); SHIBATA, Itaru, Nagoya Aichi 467-8562 (JP); MINAGAWA, Yuichiro, Nagoya Aichi 467-8562 (JP)
(74) Representative: Prüfer & Partner mbB Patentanwälte · Rechtsanwälte

(57) **Abstract**

An upper roller (12) comes into contact with a tape (C2). A lower roller (18) faces the upper roller and is disposed below a cloth (C1). A discharge outlet (65) of a nozzle (10) faces an outer circumferential face of the upper roller. The nozzle discharges an adhesive from the discharge outlet onto a bonding face of the tape. An operator may pull out a leading end of the tape as far as a pressure bonding point (P2). Thereafter, a bonding device (1) discharges the adhesive onto the bonding face of the tape while feeding the tape over a specified length. After the feeding of the tape has stopped, the operator may pull out a leading end of the cloth as far as the pressure bonding point. The bonding device performs an ordinary bonding operation.

## Description

### BACKGROUND

The present invention relates to a bonding device and a bonding device control method.

A cloth bonding device described in Japanese Laid-Open Patent Publication No. 2010-222140 applies a heated and liquefied adhesive to a cloth that is below a nozzle. The cloth bonding device places another cloth from above onto the cloth to which the adhesive has been applied, and then bonds the two cloths by pressing the cloths between a pair of rollers.

### SUMMARY

The cloth placed from above may have a narrower width than that of the lower cloth, for example. When the bonding process starts, an operator may pull the end of the cloths between the pair of the rollers. The cloth bonding device cannot apply the adhesive to the portion of the cloth that is between the current nozzle position and the point where the cloth is pressed between the pair of the rollers. In this case, the operator may have to cut off and discard the end portion of the cloth to which the adhesive is not adhering.

It is an object of the present invention to provide a bonding device and a bonding device control method that can bond one sheet to an end portion of another sheet.

A bonding device according to a first aspect of the present invention is adapted to bond a first sheet onto a second sheet using an adhesive. The bonding device includes an upper roller, a lower roller, a drive portion, a nozzle, a supply mechanism, a first feed control portion, a first supply control portion, a second feed control portion, and a second supply control portion. The upper roller is adapted to come into contact with the first sheet having a narrower width than the second sheet. The lower roller faces the upper roller. The lower roller is adapted to be disposed below the first sheet. The lower roller is adapted to press at least one of the first sheet and the second sheet against the upper roller. The drive portion is adapted to rotationally drive at least one of the upper roller and the lower roller. The nozzle includes a discharge outlet. The nozzle is adapted to discharge the adhesive from the discharge outlet onto a bonding face on the opposite side of the first sheet from the upper roller side of the first sheet. The discharge outlet is adapted to face an outer circumferential face of the upper roller. The supply mechanism is adapted to supply the adhesive to the nozzle. The first feed control portion is adapted to control the drive portion to cause the first sheet to be fed over a specified length in a state in which the first sheet is pressed between the upper roller and the lower roller. The specified length is a length from a position, on the outer circumferential face of the upper roller, that is opposite the discharge outlet to a pressure bonding point where the first sheet is pressed against the lower roller. The first supply control portion is adapted to control the supply mechanism to discharge the adhesive from the discharge outlet in conjunction with the operating of the drive portion controlled by the first feed control portion. The second feed control portion is adapted to control the drive portion to, after the first feed control portion causes the first sheet to be fed over the specified length, cause the first sheet and the second sheet to be fed in a state in which the first sheet and the second sheet are pressed between the upper roller and the lower roller. The second supply control portion is adapted to control the supply mechanism to discharge the adhesive from the discharge outlet in conjunction with the operating of the drive portion controlled by the second feed control portion. The operator may pull out a leading end of the first sheet as far as the pressure bonding point. Thereafter, the bonding device may discharge the adhesive onto the bonding face of the first sheet while feeding the first sheet over the specified length. Next, the operator may pull out a leading end of the second sheet as far as the pressure bonding point. The bonding device may perform an ordinary bonding operation by feeding the first sheet and the second sheet while discharging the adhesive from the discharge outlet. The bonding device can thus bond the first sheet to the second sheet starting from the leading end of the second sheet. It is not necessary for the operator to cut off the leading end of the second sheet, so the leading end of the second sheet can be used effectively.

The bonding device according to the first aspect may further include a clearance acquisition portion and a length computation portion. The clearance acquisition portion may be adapted to acquire a nozzle clearance. The nozzle clearance may be a distance between the discharge outlet and a position, on the outer circumferential face of the upper roller, that is opposite the discharge outlet. The length computation portion may be adapted to compute the specified length based on the nozzle clearance acquired by the clearance acquisition portion. The first feed control portion may control the drive portion based on the specified length computed by the length computation portion. In this case, the bonding device may compute the specified length based on the nozzle clearance, so the bonding device can feed the first sheet accurately over the fixed length. The bonding device can thus prevent the portion of the first sheet to which the adhesive is adhering from being fed too far. Therefore, the bonding device can inhibit the adhesive from adhering to the upper roller and the lower roller.

The bonding device according the first aspect may further include an acceptance portion adapted to accept a specified operation. The first feed control portion and the first supply control portion may respectively control the drive portion and the supply mechanism in a case where the acceptance portion has received the specified operation. In this case, the operator can cause the adhesive to be applied to the fixed length portion of the first sheet by performing the specified operation when starting the bonding task.

A method according to a second aspect of the present invention is a method for controlling a bonding device adapted to bond a first sheet onto a second sheet using an adhesive. The bonding device includes an upper roller, a lower roller, a drive portion, a nozzle, and a supply mechanism. The upper roller is adapted to come into contact with the first sheet having a narrower width than the second sheet. The lower roller faces the upper roller. The lower roller is adapted to be disposed below the first sheet. The lower roller is adapted to press at least one of the first sheet and the second sheet against the upper roller. The drive portion is adapted to rotationally drive at least one of the upper roller and the lower roller. The nozzle includes a discharge outlet. The nozzle is adapted to discharge the adhesive from the discharge outlet onto a bonding face on the opposite side of the first sheet from the upper roller side of the first sheet. The supply mechanism is adapted to supply the adhesive to the nozzle. The method includes a first feed control step of controlling the drive portion to cause the first sheet to be fed over a specified length in a state in which the first sheet is pressed between the upper roller and the lower roller, the specified length being a length from a position, on the outer circumferential face of the upper roller, that is opposite the discharge outlet to a pressure bonding point where the first sheet is pressed against the lower roller, a first supply control step of controlling the supply mechanism to discharge the adhesive from the discharge outlet in conjunction with the operating of the drive portion in the first feed control step, a second feed control step of controlling the drive portion to, after the first sheet is moved over the specified length in the first feed control step, cause the first sheet and the second sheet to be fed in a state in which the first sheet and the second sheet are pressed between the upper roller and the lower roller, and a second supply control step of controlling the supply mechanism to discharge the adhesive from the discharge outlet in conjunction with the operating of the drive portion in the second feed control step. The operator may pull out a leading end of the first sheet as far as the pressure bonding point. Thereafter, the bonding device may discharge the adhesive onto the bonding face of the first sheet while feeding the first sheet over the specified length. Next, the operator may pull out a leading end of the second sheet as far as the pressure bonding point. The bonding device may perform an ordinary bonding operation by feeding the first sheet and the second sheet while discharging the adhesive from the discharge outlet. The bonding device can thus bond the first sheet to the second sheet starting from the leading end of the second sheet. It is not necessary for the operator to cut off the leading end of the second sheet, so the leading end of the second sheet can be used effectively.

### BRIEF DESCRIPTION OF THE DRAWINGS

Embodiments will be described below in detail with reference to the accompanying drawings in which:
FIG. 1 is an oblique view of a bonding device 1 placed on a top face of a work bench 200;
FIG. 2 is an oblique view of the bonding device 1;
FIG. 3 is a left side view of the bonding device 1;
FIG. 4 is an oblique view showing an internal structure of the bonding device 1;
FIG. 5 is a left side view of the bonding device 1 when a nozzle 10 has moved to a proximate position;
FIG. 6 is a left side view of the bonding device 1 when the nozzle 10 has moved to a retracted position;
FIG. 7 is an enlarged view of a region W1 shown in FIG. 5;
FIG. 8 is an enlarged view of a region W2 shown in FIG. 7;
FIG. 9 is a block diagram that shows an electrical configuration of the bonding device 1;
FIG. 10 is a flowchart of main processing;
FIG. 11 is a flowchart that shows a continuation of FIG. 10;
FIG. 12 is a flowchart of fixed length bonding processing; and
FIG. 13 is a flowchart of fixed length computation processing.

### DETAILED DESCRIPTION

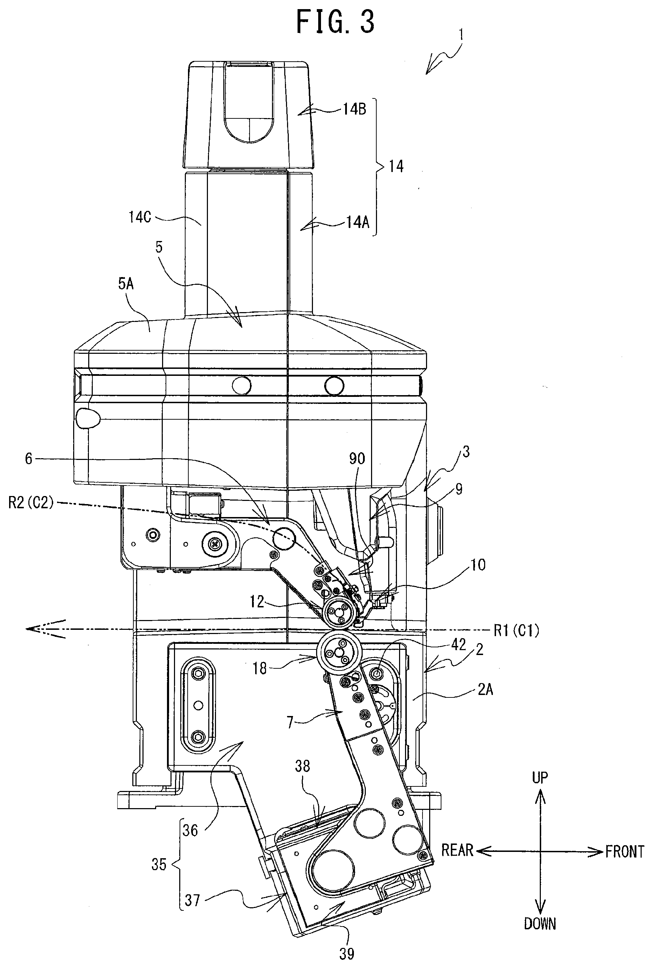

An embodiment of the present invention will be explained. In the following explanation, up and down directions, left and right directions, and front and rear directions as indicated by arrows in the drawings are used. A bonding device 1 bonds two cloths using an adhesive. As shown in FIG. 3, the bonding device 1 can perform a tape bonding process, for example, in which a long tape C2 that is made of fabric is adhered, using adhesive, to a flat cloth C1. A width of the tape C2 is narrower than that of the cloth C1. In the present embodiment, the bonding device 1 that performs the tape bonding process is explained.

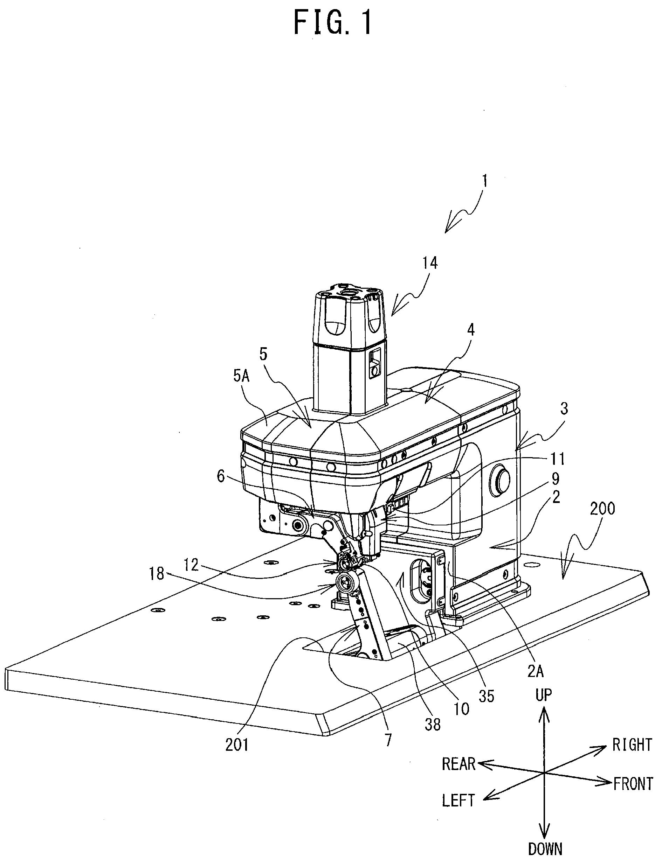

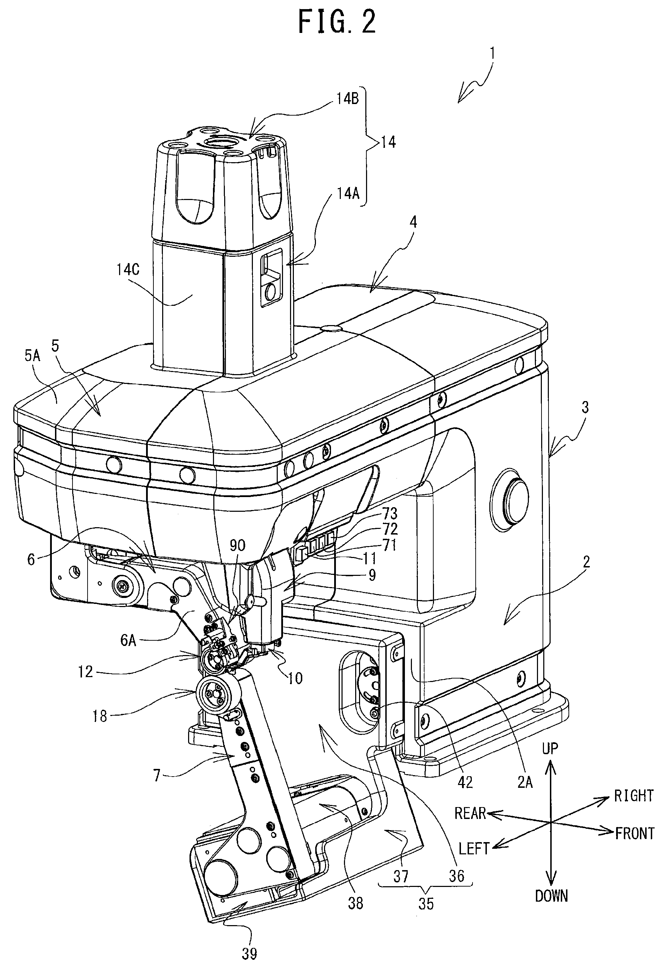

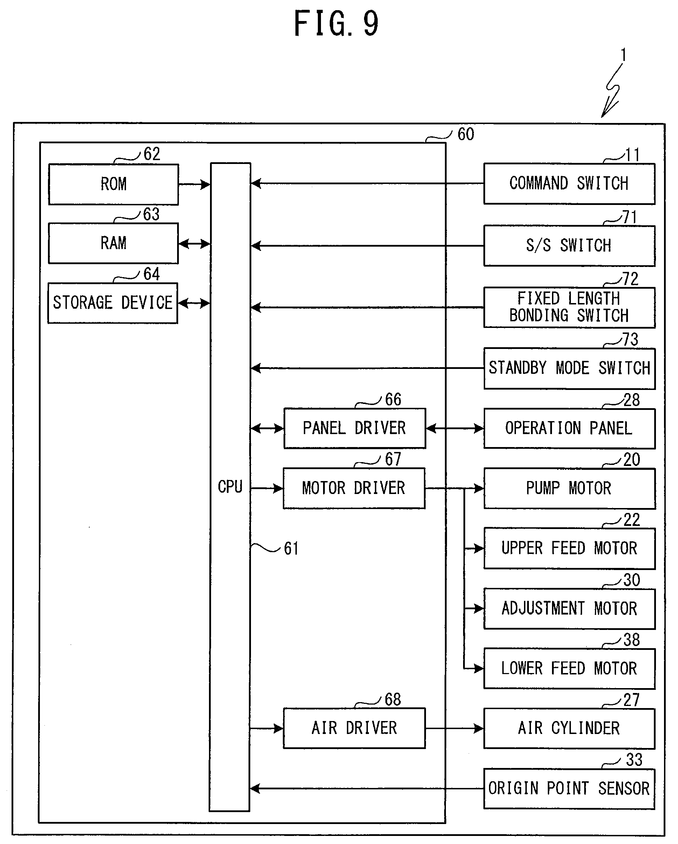

The structure of the bonding device 1 will be explained with reference to FIG. 1 to FIG. 7. As shown in FIG. 1, the bonding device 1 is placed on a top face of a work bench 200. The bonding device 1 includes a base portion 2, a pillar 3, an arm 4, a head 5, an upper feed arm 6, a lower feed arm 7, a lever 9, a nozzle 10, an operation panel 28 (refer to FIG. 9), and a control unit 60 (refer to FIG. 9) etc. As shown in FIG. 2, the base portion 2 is a substantially cuboid shape and is fixed to the top face of the work bench 200 using screws. An attachment face 2A is provided on a left side face of the base portion 2. The attachment face 2A is parallel to the vertical direction. The pillar 3 is substantially a rectangular column that extends vertically upward from a top face of the base portion 2. The arm 4 extends to the left from the upper end of the pillar 3. A command switch 11 is provided on a front face of a lower portion of the arm 4. The command switch 11 accepts a command to swing the lever 9, for example, and move the nozzle 10 to a proximate position or to a retracted position. To the right of the command switch 11 on the arm 4, a start/stop switch 71 (hereinafter called the S/S switch 71), a fixed length bonding switch 72, and a standby mode switch 73 are arrayed from left to right. The S/S switch 71 accepts commands to start and stop a bonding operation. The fixed length bonding switch 72 accepts a command to perform a fixed length bonding operation, which will be described later. The standby mode switch 73 accepts a command to set the bonding device 1 to a standby mode, which will be described later. The head 5 is a portion that extends farther to the left from the left end of the arm 4.

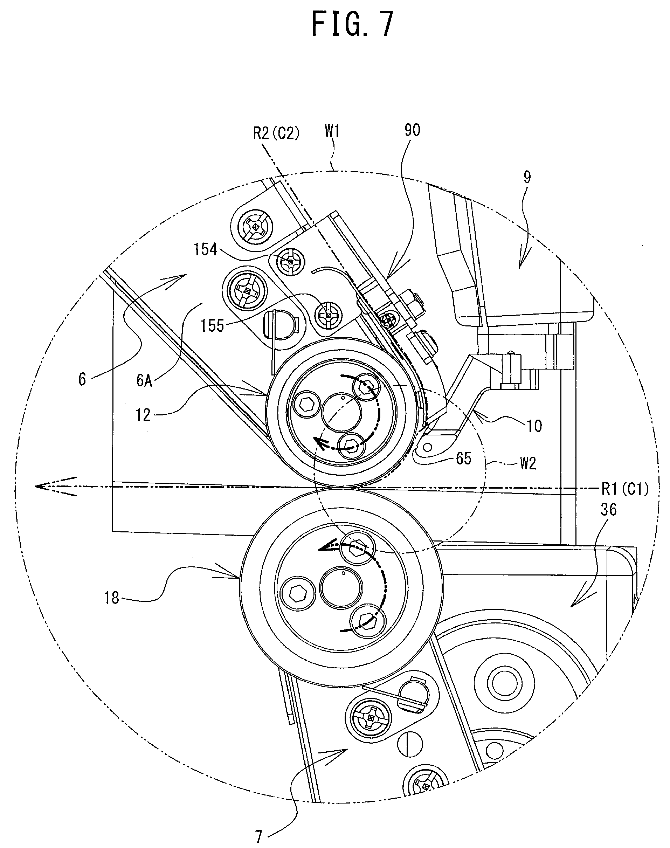

As shown in FIG. 2 to FIG. 5, the upper feed arm 6 extends substantially horizontally forward from the rear end side of a bottom face of the head 5, and the leading end side of the upper feed arm 6 bends diagonally forward and downward. The leading end of the upper feed arm 6 rotatably supports an upper roller 12. The upper roller 12 is driven by an upper roller drive mechanism 15 and rotates clockwise as seen from the left side (refer to FIG. 7). The upper roller drive mechanism 15 is provided inside the head 5. Using screws 154 and 155 (refer to FIG. 7), a plate-shaped tape guide 90 is fixed to the upper feed arm 6, in the vicinity of the front end of a left side face 6A. The tape guide 90 guides the tape C2, which is supplied from the rear of the bonding device 1, along an outer circumferential face of an upper portion of the upper roller 12.

As shown in FIG. 2 and FIG. 3, the lower feed arm 7 is detachably attached to the attachment face 2A of the base portion 2, via an attachment member 35. The lower feed arm 7 extends diagonally upward and toward the rear from a lower portion of the lower feed arm 7 that is positioned lower than the base portion 2. The leading end of the lower feed arm 7 rotatably supports a lower roller 18. The lower roller 18 faces the upper roller 12. A lower portion of the lower feed arm 7 and a lower portion of the attachment member 35 are disposed inside an opening 201 in the top face of the work bench 200 by being lowered into the opening 201 from above, and are positioned lower than a bottom portion of the base portion 2. The opening 201 is provided in the top face of the work bench 200.

The attachment member 35 includes a fixing portion 36 and a support portion 37. The fixing portion 36 is a substantially rectangular plate shape, and is fixed to the attachment face 2A using screws 42. The support portion 37 is coupled to the lower end of the fixing portion 36 and extends to the left. The support portion 37 is a substantial box shape that is open upward and to the left. A bottom face of the support portion 37 is inclined downward from the front end toward the rear end. A bracket 39 is fixed to the interior of the support portion 37. The bracket 39 has a substantially rectangular plate face as seen from the left side. A lower feed motor 38 is fixed to the right side of the plate face of the bracket 39. The lower end of the lower feed arm 7 is fixed to the left side of the plate face of the bracket 39. A drive shaft of the lower feed motor 38 is connected to a lower roller drive mechanism, via the bracket 39. The lower roller drive mechanism is provided inside the lower feed arm 7. The lower roller drive mechanism includes a plurality of pulleys and a timing belt etc., and transmits the power of the lower feed motor 38 to the lower roller 18. Thus, the lower roller 18 rotates counterclockwise as seen from the left side (refer to FIG. 7). Attachment positions of the lower feed motor 38 and the bracket 39 with respect to the support portion 37 in the left-right direction can be adjusted. As a result, the bonding device 1 can adjust the position of the lower roller 18 in the left-right direction, in accordance with a position of the application of the adhesive.

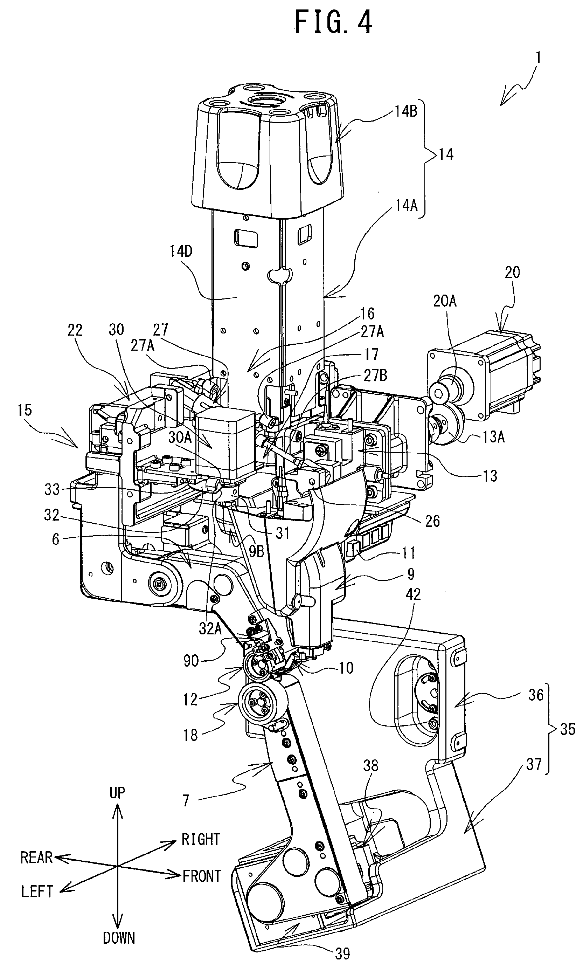

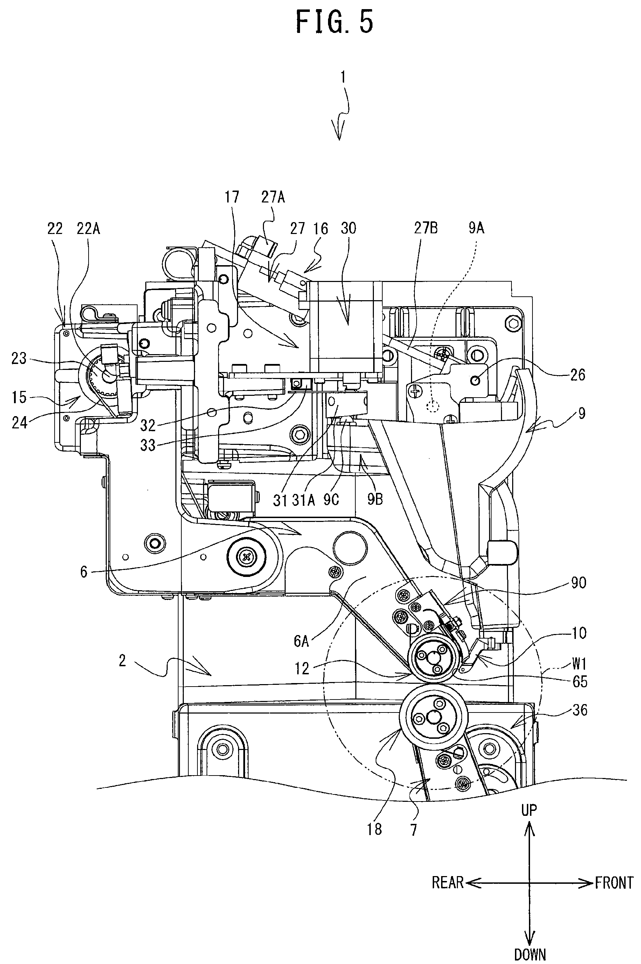

As shown in FIG. 2 and FIG. 3, the lever 9 is arm-shaped, and extends downward from the front end side of the bottom face of the head 5. A pivotal shaft 9A (refer to FIG. 5) rotatably supports the upper end of the lever 9. The pivotal shaft 9A extends in the left-right direction. The left end of the pivotal shaft 9A supports the upper end of the lever 9, and the right end of the pivotal shaft 9A is connected to a gear pump 13. The lower end of the lever 9 can swing in the front-rear direction around the pivotal shaft 9A. As shown in FIG. 5, a protrusion 9B is provided on an upper portion of a rear face side of the lever 9. The protrusion 9B is a substantially rectangular column that protrudes to the rear. A top face of the protrusion 9B is provided with a hemispherical contacted face 9C. The contacted face 9C comes into contact, from below, with a cam face 31A of a cam rotation body 31. An adhesive supply channel is provided inside the lever 9. The upper end of the supply channel is connected to an adhesive flow channel provided inside the pivotal shaft 9A. The adhesive that is supplied to the supply channel by the gear pump 13 (refer to FIG. 4) via the flow channel is supplied to the nozzle 10. The lever 9 is provided with a bar-shaped heater in the vicinity of the supply channel. The heater heats the adhesive flowing through the supply channel of the lever 9. The nozzle 10 is detachably mounted on the lower end of the lever 9. The nozzle 10 includes a plurality of discharge outlets 65 (refer to FIG. 7), in a position facing the outer circumferential face of the upper roller 12. The discharge outlets 65 are openings that discharge the adhesive.

The operation panel 28 (refer to FIG. 9) is provided on the top face of the work bench 200. The operation panel 28 includes a liquid crystal display portion, various types of switches, and the like, for example. The liquid crystal display portion displays various types of screens. An operator can input various types of information to the bonding device 1 by operating the various types of switches. The control unit 60 (refer to FIG. 9) is installed on the bottom face of the work bench 200. The control unit 60 controls the operation of the bonding device 1.

Feed paths R1 and R2 will be explained with reference to FIG. 3 and FIG. 7. The feed path R1 is a feed path of the cloth C1 in the tape bonding process. The feed path R2 is a feed path of the tape C2 in the tape bonding process. The upper roller 12 and the lower roller 18 face each other in the up-down direction from either side of the feed paths R1 and R2 and can come into contact with each other. A contact point at which the upper roller 12 and the lower roller 18 come into contact with each other is a pressure bonding point at which the upper roller 12 and the lower roller 18 pressure-bond the cloth C1 and the tape C2 with the adhesive between the cloth C1 and the tape C2. The feed path R1 extends from the front of the bonding device 1 toward the rear, passing through the pressure bonding point. The feed path R2 passes from a tape supply source along the outer circumferential face of the upper roller 12, after passing the top portion of the upper roller 12, and extends to the rear, passing through the pressure bonding point. The tape supply source is installed to the rear of the bonding device 1.

The axial directions of the rotational axes of the upper roller 12 and the lower roller 18 are parallel to the left-right direction of the bonding device 1. The outside diameter of the lower roller 18 is greater than the outside diameter of the upper roller 12. The discharge outlets 65 of the nozzle 10 are positioned toward the front from the pressure bonding point. The discharge outlets 65 face the outer circumferential face of the upper roller 12 and are separated from the outer circumferential face by a specified clearance (refer to FIG. 7). The discharge outlets 65 discharge the adhesive toward a bonding face of the tape C2 on the opposite side from the upper roller 12. The cloth C1 is disposed below the tape C2. By rotationally driving the upper roller 12 and the lower roller 18, the bonding device 1 can overlay the bonding face of the tape C2, to which the adhesive has been applied, onto the top face of the cloth C1, then feed the cloth C1 and the tape C2 toward the rear while pressing them together at the pressure bonding point.

The internal structure of the head 5 will be explained with reference to FIG. 4 to FIG. 6. The gear pump 13, a cartridge mounting portion 14, the upper roller drive mechanism 15, a lever swinging mechanism 16, a nozzle clearance adjustment mechanism 17, and the like are provided on the inner side of a cover 5A of the head 5. The gear pump 13 is provided to the front right of the head 5, and an adhesive supply channel is provided inside the gear pump 13. A pump motor 20 is provided inside the arm 4 (refer to FIG. 2). A gear 20A is fixed to a rotating shaft of the pump motor 20, and meshes with a gear 13A of the gear pump 13. When the pump motor 20 operates, the gear 13A operates. When the gear 13A operates, the gear pump 13 draws an appropriate amount of the adhesive out of a cartridge that is mounted in the cartridge mounting portion 14, and supplies the adhesive to the supply channel inside the lever 9, via the flow channel inside the pivotal shaft 9A.

The cartridge mounting portion 14 is provided to the rear of the gear pump 13, and includes a main body 14A and a lid 14B. The main body 14A includes a cover 14C (refer to FIG. 3) and a storage portion 14D. The cover 14C covers a periphery of the storage portion 14D. The storage portion 14D is provided standing vertically, and is a bottomed rectangular cylinder whose top portion is open. The cartridge is detachably mounted in the storage portion 14D. The cartridge houses a hot melt adhesive. When the cartridge is mounted in the storage portion 14D, the adhesive can be supplied to the gear pump 13. The hot melt adhesive liquefies when the adhesive is heated to a predetermined temperature, and hardens at a temperature lower than the predetermined temperature. The storage portion 14D is provided with a pair of heaters on both sides of the cartridge. The pair of heaters heat up the cartridge. As a result, the adhesive melts and becomes liquefied. The lid 14B is detachably attached to an upper portion of the storage portion 14D, and opens and closes the upper portion opening of the storage portion 14D. When the lid 14B is screwed on by a rotation operation, the lid 14B can be fixed to the upper portion of the storage portion 14D, and can be removed by being loosened.

As shown in FIG. 4 and FIG. 5, the upper roller drive mechanism 15 is provided on the left end side of the head 5. The upper roller drive mechanism 15 includes the upper feed motor 22, a drive pulley 23, a first driven pulley, a first timing belt 24, a second driven pulley, a second timing belt and the like. The first driven pulley, the second driven pulley and the second timing belt are provided inside the upper feed arm 6. The upper feed motor 22 is fixed, on a rear face side of the head 5, to the upper portion of the head 5 on the left end side. A drive shaft 22A of the upper feed motor 22 extends to the left. The drive pulley 23 is fixed to the drive shaft 22A. The first timing belt 24 is provided around the drive pulley 23 and the first driven pulley. The second driven pulley is fixed to a rotating shaft of the upper roller 12. The second timing belt is provided around the first driven pulley and the second driven pulley. Thus, the power of the upper feed motor 22 is transmitted to the upper roller 12, via the drive pulley 23, the first driven pulley, the first timing belt 24, the second driven pulley, and the second timing belt. As a result, the upper roller 12 rotates clockwise as seen from the left side (refer to FIG. 7).

The lever swinging mechanism 16 is provided on the left end side of the head 5. The lever swinging mechanism 16 includes an air cylinder 27 and a coupling shaft 26. The air cylinder 27 is adjacent to a left side of the storage portion 14D of the cartridge mounting portion 14. The air cylinder 27 includes two air inlets 27A, to the front and the rear. Intake-exhaust hoses are connected to the two air inlets 27A. The bonding device 1 controls the intake and exhaust of compressed air from the intake-exhaust hoses to the two air inlets 27A. A position of a piston inside the air cylinder 27 moves according to the control of the air intake and exhaust. A rod-shaped movable portion 27B extends in the front-rear direction, and is connected to the piston. When the piston moves, the movable portion 27B moves in the front-rear direction. The coupling shaft 26 is provided on the leading end of the movable portion 27B. The coupling shaft 26 is rotatably coupled to the lever 9, at a position separated upward and to the front from the pivotal shaft 9A of the lever 9.

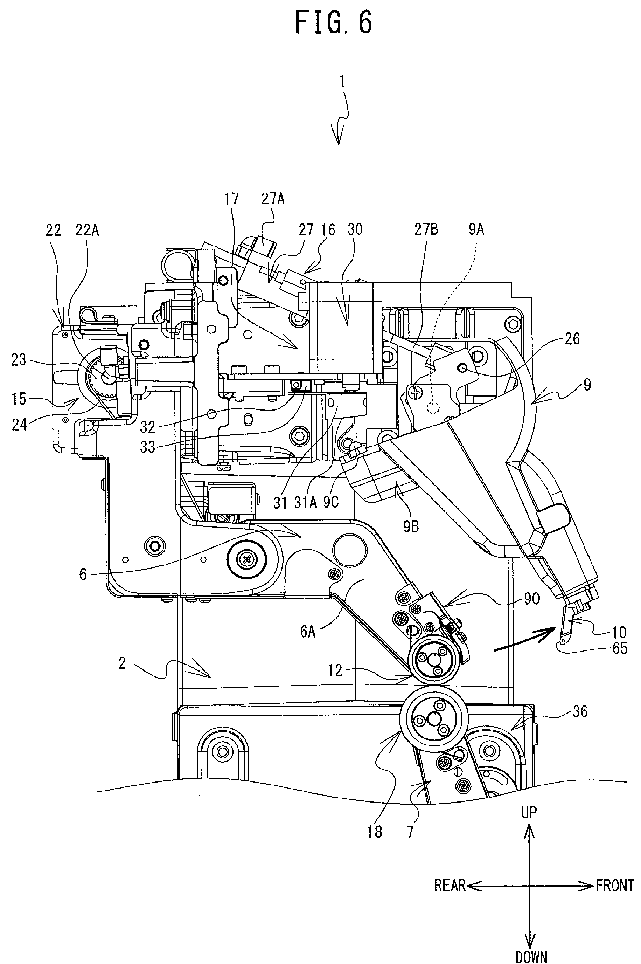

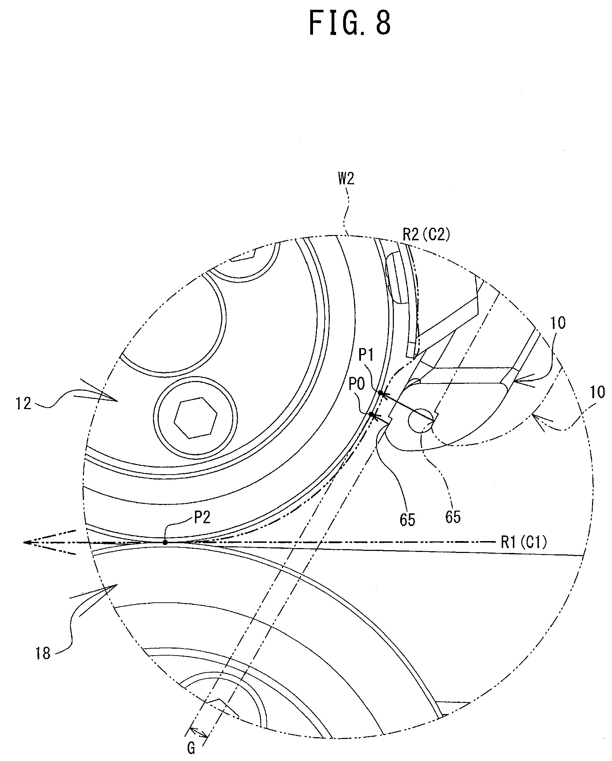

As shown in FIG. 5, when the movable portion 27B of the air cylinder 27 moves downward and to the front, the movable portion 27B moves the coupling shaft 26 forward. Thus, the lever 9 swings clockwise, as seen from the left side, around the pivotal shaft 9A, and the nozzle 10 moves to the proximate position. As shown in FIG. 6, when the movable portion 27B of the air cylinder 27 moves upward and to the rear, the movable portion 27B moves the coupling shaft 26 rearward. Thus, the lever 9 swings counterclockwise, as seen from the left side, around the pivotal shaft 9A, and the nozzle 10 moves to the retracted position. The proximate position is a position where the discharge outlets 65 of the nozzle 10 are close to the outer circumferential face of the upper roller 12 from the front. When the nozzle 10 is in the proximate position, the discharge outlets 65 and the outer circumferential face of the upper roller 12 are opposite one another, with a clearance G between them (refer to FIG. 8). During the bonding operation, the bonding device 1 moves the nozzle 10 to the proximate position. The retracted position is a position where the discharge outlets 65 are significantly distant from the outer circumferential face of the upper roller 12 toward the front. For example, before the tape bonding process, when the operator disposes the tape C2 along the outer circumferential face of the upper roller 12, the bonding device 1 moves the nozzle 10 to the retracted position. The operator can perform the operation easily.

The nozzle clearance adjustment mechanism 17 is provided to the left of the air cylinder 27. The nozzle clearance adjustment mechanism 17 includes an adjustment motor 30, the cam rotation body 31, an origin point sensor 33, a detection plate 32 and the like. A drive shaft 30A of the adjustment motor 30 extends downward (refer to FIG. 4). The cam rotation body 31 is a substantially circular cylindrical body that extends in the up-down direction. The top face of the cam rotation body 31 is coupled to the lower end of the drive shaft 30A. The cam rotation body 31 is provided with a cam face 31A on its bottom face. The cam face 31 A is an inclined face. When the lever 9 swings around the pivotal shaft 9A and the nozzle 10 moves to the proximate position, the contacted face 9C of the lever 9 comes into contact with the cam face 31A from below. When the adjustment motor 30 operates, the cam rotation body 31 rotates together with the drive shaft 30A. Thus, a contact position of the contacted face 9C with respect to the cam face 31A changes. Depending on the contact position with respect to the cam face 31A, the contacted face 9C moves in the up-down direction, and the lever 9 swings around the pivotal shaft 9A. Thus, the bonding device 1 can minutely adjust a clearance between the nozzle 10 and the outer circumferential face of the upper roller 12, by driving the adjustment motor 30 when the nozzle 10 is in the proximate position.

The origin point sensor 33 is provided in the vicinity of the drive shaft 30A of the adjustment motor 30. The detection plate 32 is substantially disk shaped and is fixed to the top face of the cam rotation body 31. The detection plate 32 extends substantially horizontally below the origin point sensor 33, and is provided with a notch-shaped edge portion 32A (refer to FIG. 4). The detection plate 32 rotates together with the drive shaft 30A. The origin point sensor 33 detects an origin position of the nozzle 10 by detecting the position of the edge portion 32A.

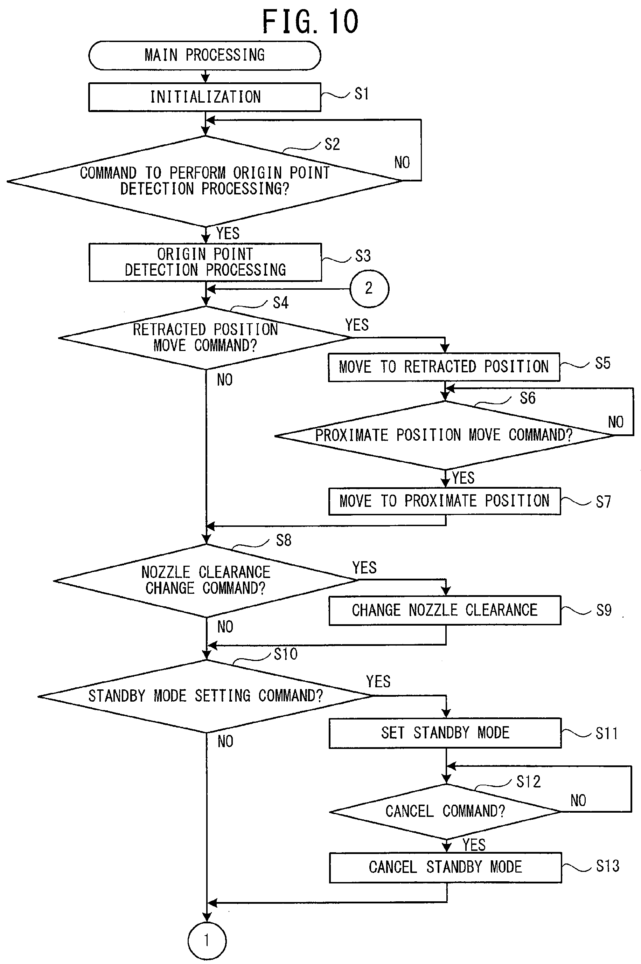

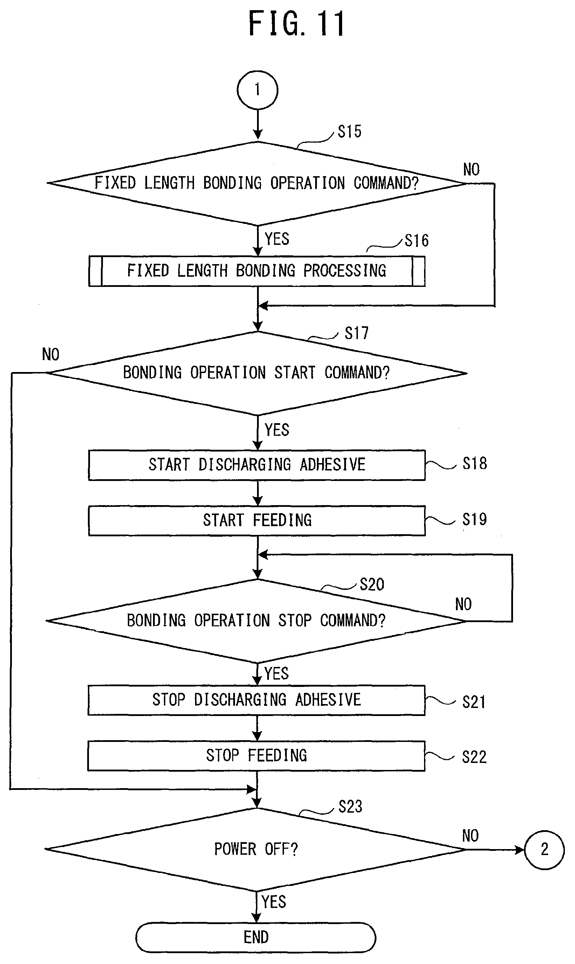

An electrical configuration of the bonding device 1 will be explained with reference to FIG. 9. The bonding device 1 includes the control unit 60. The control unit 60 is connected to the command switch 11, the S/S switch 71, the fixed length bonding switch 72, the standby mode switch 73, the operation panel 28, the pump motor 20, the upper feed motor 22, the adjustment motor 30, the lower feed motor 38, the air cylinder 27, the origin point sensor 33, and the like. The control unit 60 includes a CPU 61, a ROM 62, a RAM 63, a storage device 64, a panel driver 66, a motor driver 67, an air driver 68, and the like. The CPU 61 performs overall control of the operation of the bonding device 1. The ROM 62 stores a main program and the like. The main program is a program for performing main processing (refer to FIG. 10 and FIG. 11). The RAM 63 stores various types of information temporarily. The storage device 64 is a non-volatile storage device and stores initial values and the like for various types of setting values.

The panel driver 66 is connected to the operation panel 28 and controls the operation of the liquid crystal display portion of the operation panel 28. The panel driver 66 outputs to the control unit 60 information that is received through the various types of switches on the operation panel 28. Based on commands from the control unit 60, the motor driver 67 controls the respective operations of the pump motor 20, the upper feed motor 22, the adjustment motor 30, and the lower feed motor 38. The air driver 68 controls the amount of air that is supplied to the air inlet 27A of the air cylinder 27.

The main processing that the CPU 61 performs will be explained with reference to FIG. 10 and FIG. 11. When the operator starts the bonding device 1 by turning on a power switch, the CPU 61 reads the main program from the ROM 62 and performs the main processing.

The CPU 61 performs initialization (Step S1). Specifically, the CPU 61 initializes various types of parameters that are necessary for performing the main processing and adjusts the temperature of the heater to a set temperature. The CPU 61 determines whether a command has been issued to perform origin point detection processing (Step S2). Specifically, with the nozzle 10 in the proximate position, the CPU 61 operates the adjustment motor 30 and detects the origin position of the nozzle 10 by detecting the edge portion 32A. The CPU 61 determines that the command to perform origin point detection processing has been issued when the CPU 61 detects that an Origin Point Detection key on the operation panel 28 has been pressed, for example. Until the CPU 61 detects that the Origin Point Detection key has been pressed (NO at Step S2), the CPU 61 waits. When the CPU 61 detects that the Origin Point Detection key has been pressed (YES at Step S2), the CPU 61 performs the origin point detection processing (Step S3). The CPU 61 can recognize the position of the nozzle 10 accurately, so to the CPU 61 can adjust the clearance G accurately. After completing the origin point detection processing, the CPU 61 operates the adjustment motor 30 such that the clearance G (refer to FIG. 8) becomes the initial value for the nozzle clearance. The nozzle clearance is the distance between the discharge outlets 65 of the nozzle 10 and the outer circumferential face of the upper roller 12, which is opposite the discharge outlets 65. The nozzle clearance is the set value of the clearance G. An initial value for the nozzle clearance is stored in the storage device 64 in advance.

The CPU 61 determines whether a retracted position move command has been issued (Step S4). The retracted position move command is a command to move the nozzle 10 to the retracted position (refer to FIG. 6) by swinging the lever 9 toward the front. When the CPU 61 detects that the command switch 11 has been pressed, the CPU 61 determines that the retracted position move command has been issued. For example, when the operator places the tape C2 along the upper roller 12 prior to the tape bonding process, the operator presses the command switch 11 in order to move the nozzle 10 to the retracted position. When the CPU 61 detects that the command switch 11 has been pressed (YES at Step S4), the CPU 61 moves the nozzle 10 to the retracted position by operating the air cylinder 27 and swinging the lever 9 toward the front (Step S5). The nozzle 10 moves a significant distance away from the upper roller 12 toward the front. The operator can therefore easily place the tape C2 along the upper roller 12. When the retracted position move command has not been issued (NO at Step S4), the CPU 61 advances the processing to Step S8.

With the nozzle 10 in the retracted position, the CPU 61 determines whether a proximate position move command has been issued (Step S6). The proximate position move command is a command to move the nozzle 10 to the proximate position (refer to FIG. 5) by swinging the lever 9 toward the rear. When the CPU 61 detects that the command switch 11 has been pressed, the CPU 61 determines that the proximate position move command has been issued. Until the proximate position move command has been issued (NO at Step S6), the CPU 61 waits. When the operator completes the placing of the tape C2, for example, the operator may press the command switch 11 again. When the CPU 61 detects that the command switch 11 has been pressed (YES at Step S6), the CPU 61 moves the nozzle 10 to the proximate position (refer to FIG. 5) by operating the air cylinder 27 and swinging the lever 9 toward the rear (Step S7).

The CPU 61 determines whether a nozzle clearance change command has been issued (Step S8). The nozzle clearance affects the coating thickness of the adhesive that is applied to the bonding face of the tape C2. The coating thickness of the adhesive affects the tensile strength of the two cloths after the cloths are bonded. The operator may set the nozzle clearance such that the coating thickness is to be the optimum for bonding, taking into account the materials and thicknesses of the cloth C1 and the tape C2, the type of the adhesive, the bonding strength, and the like, for example. The CPU 61 stores the current nozzle clearance in the RAM 63. The nozzle clearance can be changed by an operation of the operation panel 28. When the nozzle clearance change command has been received through the operation panel 28 (YES at Step S8), the CPU 61 changes the nozzle clearance that is stored in the RAM 63 (Step S9). The CPU 61 operates the adjustment motor 30 to change the clearance G to the post-change nozzle clearance. When the nozzle clearance change command has not been issued (NO at Step S8), the CPU 61 advances the processing to Step S10.

The CPU 61 determines whether a standby mode setting command has been issued (Step S10). The standby mode is a mode in which the electric power supply to a specified circuit is cut off in order to save electricity. The standby mode is a mode in which electric power is supplied to at least the heater in order to keep the temperature of the heater at a specified temperature. Thus, when the standby mode is canceled, the CPU 61 can perform the tape bonding process immediately. When the CPU 61 detects that the standby mode switch 73 (refer to FIG. 2) has been pressed, the CPU 61 determines that the standby mode setting command has been issued. When the CPU 61 does not detect the pressing of the standby mode switch 73 (NO at Step S10), the CPU 61 advances the processing to Step S15 in FIG. 11. When the CPU 61 detects the pressing of the standby mode switch 73 (YES at Step S10), the CPU 61 sets the bonding device 1 to the standby mode (Step S11).

The CPU 61 determines whether a cancel command has been issued (Step S12). The cancel command is a command to cancel the standby mode. When the CPU 61 detects the pressing of the standby mode switch 73, the CPU 61 determines that the cancel command has been issued. Until the CPU 61 detects the pressing of the standby mode switch 73 (NO at Step S12), the CPU 61 continues the standby mode. When the CPU 61 detects the pressing of the standby mode switch 73 (YES at Step S12), the CPU 61 cancels the standby mode (Step S 13).

As shown in FIG. 11, the CPU 61 determines whether a fixed length bonding operation command has been issued (Step S 15). The fixed length bonding operation is an operation in which the adhesive is applied over a fixed length of the bonding face of the tape C2. The fixed length is a specified length on the outer circumferential face of the upper roller 12, from the position that is opposite the discharge outlets 65 to the point of the pressure bonding point with the lower roller 18. When the CPU 61 detects the pressing of the fixed length bonding switch 72, the CPU 61 determines that the fixed length bonding operation command has been issued. It is assumed that the operator pulls out the leading end of the cloth C1 and the leading end of the tape C2 along the respective feed paths R1, R2 (refer to FIG. 3 and FIG. 7), as far as the pressure bonding point between the upper roller 12 and the lower roller 18, then starts the tape bonding process. At this time, the bonding device 1 cannot apply the adhesive to the entire portion of the bonding face of the tape C2 from the position that is opposite the discharge outlets 65 to the pressure bonding point with the lower roller 18. After the cloth C1 and the tape C2 have been bonded, the operator, using scissors or the like, may have to cut off the leading ends of both the tape C2 and the cloth C1, to which the tape C2 has not been bonded.

In the present embodiment, the operator may utilize the fixed length bonding operation of the bonding device 1 in order to bond the tape C2 to the cloth C1 starting from the leading end of the cloth C1. Before starting the tape bonding process, the operator may pull out the leading end of the tape C2 along the feed path R2 as far as the pressure bonding point. At this time, the operator may not place the leading end of the cloth C1 at the pressure bonding point. The operator may press the fixed length bonding switch 72. When the CPU 61 detects the pressing of the fixed length bonding switch 72 (YES at Step S 15), the CPU 61 performs fixed length bonding processing (Step S16).

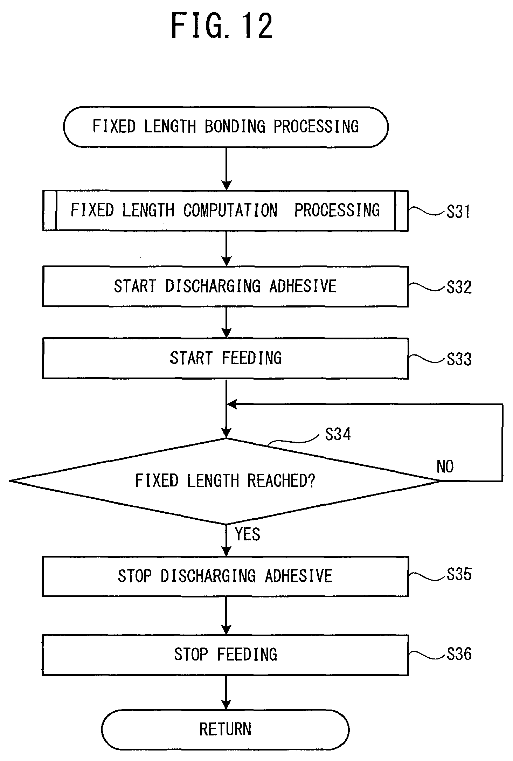

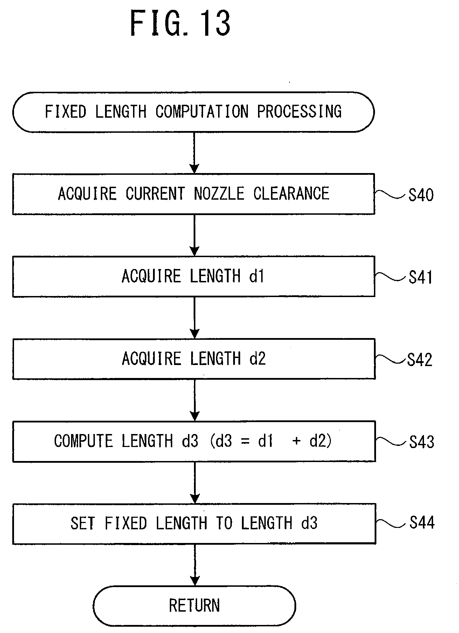

The fixed length bonding processing will be explained with reference to FIG. 12 and FIG. 13. The CPU 61 performs fixed length computation processing (Step S31). As shown in FIG. 13, the CPU 61 acquires the current nozzle clearance that is stored in the RAM 63 (Step S40). From length information that is stored in the storage device 64, the CPU 61 acquires a length d1 that corresponds to the current nozzle clearance (Step S41). The length d1 is the length from a nozzle origin position P0 to a nozzle current position P1 on the outer circumferential face of the upper roller 12, as shown in FIG. 8. When the nozzle current position P1 is on the opposite side of a pressure bonding point P2 with respect to the nozzle origin position P0, the length d1 has a positive value. When the nozzle current position P1 is on the same side of a pressure bonding point P2 with respect to the nozzle origin position P0, the length d1 has a negative value. The nozzle origin position P0 is the position on the outer circumferential face of the upper roller 12 that is opposite the discharge outlets 65 when the nozzle 10 is in the origin position. The nozzle current position P1 is the position on the outer circumferential face of the upper roller 12 that is opposite the discharge outlets 65 when the nozzle 10 is in the current position (the position of the nozzle 10 that is indicated by a dashed-two dotted line in FIG. 8). The length information is information in which the nozzle clearance and the length d1 are associated with one another. The length d1 is uniquely defined based on the nozzle clearance. The length information is stored in the storage device 64 in advance.

The CPU 61 acquires a length d2 from the storage device 64 (Step S42). The length d2 is the length from the pressure bonding point P2 to the nozzle origin position P0 on the outer circumferential face of the upper roller 12. The storage device 64 stores a value for the length d2 for each type of the nozzle 10, and the CPU 61 may acquire the length d2 that corresponds to the type of the nozzle 10 that is currently mounted on the lower end of the lever 9. The CPU 61 computes a length d3 (Step S43). The length d3 is the length from the nozzle current position P1 to the pressure bonding point P2 on the outer circumferential face of the upper roller 12. The length d3 is computed by adding the length d2 to the length d1. The CPU 61 sets the fixed length to the computed length d3 (Step S44) and stores the length d3 in the RAM 63. Returning to FIG. 12, the CPU 61 terminates the fixed length computation processing (Step S31) and advances the processing to Step S32.

The CPU 61 performs the fixed length bonding operation by starting the discharge of the adhesive from the discharge outlets 65 (Step S32) and starting the feeding of the tape C2 (Step S33). The CPU 61 operates the upper feed motor 22 and the lower feed motor 38 in synchronization. As shown in FIG. 7, the upper roller drive mechanism 15 (refer to FIG. 5) rotates the upper roller 12 clockwise as seen from the left side. The lower roller drive mechanism rotates the lower roller 18 counterclockwise as seen from the left side. The tape C2 is moved along the feed path R2. The CPU 61 operates the pump motor 20 while operating the upper feed motor 22 and the lower feed motor 38. When the pump motor 20 operates, the gear pump 13 (refer to FIG. 4) operates, drawing an appropriate amount of the adhesive out of the cartridge that is mounted in the cartridge mounting portion 14 and supplying the adhesive to the supply channel in the interior of the lever 9. The adhesive flows from the supply channel to the flow channel inside the nozzle 10 and is discharged from the discharge outlets 65. The adhesive is applied to the bonding face of the tape C2.

After starting the feeding of the tape C2, the CPU 61 determines whether the fed length of the tape C2 has reached the fixed length, that is, the length d3 (Step S34). The CPU 61 computes the fed length of the tape C2 based on the angles of rotation of the upper feed motor 22 and the lower feed motor 38. Until the fed length reaches the length d3 (NO at Step S34), the CPU 61 waits. When the fed length reaches the length d3 (YES at Step S34), the CPU 61 stops the discharge of the adhesive (Step S35) and stops the feeding of the tape C2 (Step S36). Therefore, the adhesive adheres to the bonding face of the tape C2 from the pressure bonding point P2 to the nozzle current position P1. As explained above, the CPU 61 computes the fixed length based on the current nozzle clearance. The bonding device 1 can prevent the portion of the tape C2 to which the adhesive is adhering from being fed too far. Therefore, the bonding device 1 can prevent the adhesive from adhering to the upper roller 12 and the lower roller 18. The operator may cut off the leading end of the tape C2 to which the adhesive is not adhering. The portion of the tape C2 to which the adhesive is adhering then becomes the leading end of the tape C2.

Next, the operator may pass the leading end of the cloth C1 under the nozzle 10 from the front side of the bonding device 1 and positions the leading end of the cloth C1 at the pressure bonding point P2. The operator may place the leading end of the cloth C1 underneath the tape C2 such that the bonding face of the tape C2 overlays the leading end of the cloth C1 (refer to FIG. 8). The CPU 61 determines whether a bonding operation start command has been issued (Step S 17). In order to start the bonding operation, the operator may press the S/S switch 71. When the CPU 61 detects the pressing of the S/S switch 71, the CPU 61 determines that the bonding operation start command has been issued. When the CPU 61 determines that the S/S switch 71 has not been pressed (NO at Step S 17), the CPU 61 advances the processing to Step S23.

When the CPU 61 detects the pressing of the S/S switch 71 (YES at Step S 17), the CPU 61 performs the ordinary bonding operation by starting the discharge of the adhesive from the discharge outlets 65 (Step S18) and starting the feeding of the cloth C1 and the tape C2 (Step S 19). When the feeding starts at Step S 19, the adhesive is already adhering to the portion of the bonding face of the tape C2 from the pressure bonding point P2 to the nozzle current position P1. The bonding device 1 can bond the bonding face of the tape C2 to the cloth C1 starting from the leading end of the cloth C1.

The CPU 61 determines whether a bonding operation stop command has been issued (Step S20). In order to stop the bonding operation, the operator may press the S/S switch 71 again. When the CPU 61 detects the pressing of the S/S switch 71, the CPU 61 determines that the bonding operation stop command has been issued. When the CPU 61 determines that the S/S switch 71 has not been pressed (NO at Step S20), the CPU 61 continues the bonding operation. When the CPU 61 detects the pressing of the S/S switch 71 (YES at Step S20), the CPU 61 stops the discharge of the adhesive (Step S21) and stops the feeding of the cloth C1 and the tape C2 (Step S22). The bonding device 1 can bond the bonding face of the tape C2 to the cloth C1 starting from the leading end of the cloth C1. It is not necessary for the operator to cut off the leading end of the cloth C1, so the leading end of the cloth C1 can be used effectively.

The CPU 61 determines whether the power switch has been turned off (Step S23). When the power switch is on (NO at Step S23), the CPU 61 returns the processing to Step S4 in FIG. 10 and repeats the processing. When the power switch has been turned off (YES at Step S23), the CPU 61 terminates the main processing.

In the preceding explanation, the tape C2 is equivalent to a first sheet of the present invention. The cloth C1 is equivalent to a second sheet of the present invention. The pump motor 20 is equivalent to a supply mechanism of the present invention. The upper feed motor 22 and the lower feed motor 38 are equivalent to a drive portion of the present invention. The fixed length bonding switch 72 is equivalent to an acceptance portion of the present invention. The fixed length is equivalent to a specified length of the present invention. The CPU 61 that performs the processing at Steps S33, S34, and S36 in FIG. 12 is equivalent to a first feed control portion of the present invention. The CPU 61 that performs the processing at Steps S32, S34, and S35 in FIG. 12 is equivalent to a first supply control portion of the present invention. The CPU 61 that performs the processing at Steps S 19, S20, and S22 in FIG. 11 is equivalent to a second feed control portion of the present invention. The CPU 61 that performs the processing at Steps S18, S20, and S21 in FIG. 11 is equivalent to a second supply control portion of the present invention. The CPU 61 that performs the processing at Step S40 in FIG. 13 is equivalent to a clearance acquisition portion of the present invention. The CPU 61 that performs the processing at Steps S41 to S43 in FIG. 13 is equivalent to a length computation portion of the present invention. The process in which the CPU 61 performs the processing at Steps S33, S34, and S36 is equivalent to a first feed control step of the present invention. The process in which the CPU 61 performs the processing at Steps S32, S34, and S35 is equivalent to a first supply control step of the present invention. The process in which the CPU 61 performs the processing at Steps S19, S20, and S22 is equivalent to a second feed control step of the present invention. The process in which the CPU 61 performs the processing at Steps S18, S20, and S21 is equivalent to a second supply control step of the present invention. The process in which the CPU 61 performs the processing at Step S40 is equivalent to a clearance acquisition step of the present invention. The process in which the CPU 61 performs the processing at Steps S41 to S43 is equivalent to a length computation step of the present invention.

As described above, the bonding device 1 of the present embodiment can perform the tape bonding process that bonds the tape C2 onto the cloth C1 with the adhesive. The bonding device 1 includes the nozzle 10, the upper roller 12, the lower roller 18, the upper feed motor 22, the lower feed motor 38, and so on. The nozzle 10 includes the discharge outlets 65 that discharge the adhesive. The upper roller 12 comes into contact with the face of the tape C2 that is opposite to the bonding face. The lower roller 18 is positioned below the cloth C1 and the tape C2. The lower roller 18 faces the upper roller 12. The lower roller 18 comes into contact with the bottom face of the cloth C1. The upper roller 12 and the lower roller 18 clamp the cloth C1 and the tape C2. The upper roller 12 and the lower roller 18 feed the cloth C1 and the tape C2 with the bonding face of the tape C2 overlaying the top face of the cloth C1. The upper feed motor 22 rotationally drives the upper roller 12, and the lower feed motor 38 rotationally drives the lower roller 18. In coordination with the lower roller 18, the upper roller 12 presses the cloth C1 and the tape C2 together at the pressure bonding point. The discharge outlets 65 of the nozzle 10 face the outer circumferential face of the upper roller 12 at a position further upstream side in the feed direction of the tape C2 than the pressure bonding point. The bonding device 1 applies the adhesive to the bonding face of the tape C2 while feeding the tape C2.

The operator may pull the leading end of the tape C2 out as far as the pressure bonding point P2. Thereafter, the CPU 61 performs the fixed length bonding operation. The fixed length bonding operation is an operation that discharges the adhesive onto the bonding face of the tape C2 while feeding out a fixed length of the tape C2. After the fixed length bonding operation, the operator may place the leading end of the cloth C1 underneath the tape C2 at the pressure bonding point P2. The CPU 61 performs the ordinary bonding operation. The bonding device 1 can bond the bonding face of the tape C2 to the leading end of the cloth C1. Therefore, it is not necessary for the operator to cut off the leading end of the cloth C1.

In the present embodiment, the CPU 61 acquires the nozzle clearance. Based on the acquired nozzle clearance, the CPU 61 computes the fixed length (the length d3) that the tape C2 is to be fed by the fixed length bonding operation. Based on the computed fixed length, the CPU 61 controls the operation of the upper feed motor 22 and the lower feed motor 38. The bonding device 1 is able to accurately feed the fixed length portion of the tape C2 from the nozzle current position P1 to the pressure bonding point P2. The bonding device 1 is able to prevent the tape C2 to which the adhesive is adhering from being fed too far. Therefore, the bonding device 1 is able to prevent the adhesive from adhering to the upper roller 12 and the lower roller 18.

In the present embodiment, the CPU 61 performs the fixed length bonding operation when it receives the pressing of the fixed length bonding switch 72. By pressing the fixed length bonding switch 72 when starting the tape bonding process, the operator can apply the adhesive to the fixed length portion of the tape C2. Thereafter, the operator can place the leading end of the cloth C1 underneath the tape C2 at the pressure bonding point P2. At this time, the CPU 61 is able to perform the ordinary bonding operation.

The present invention is not limited to the above-described embodiment and the following various modifications are possible, for example. The bonding device 1 of the above-described embodiment can bond a flexible sheet-like material, which is not limited to the cloth.

The fixed length bonding switch 72 is provided in the lower portion of the front face of the arm 4. The bonding device 1 receives the command to perform the fixed length bonding operation by detecting the pressing of the fixed length bonding switch 72. The bonding device 1 may receive the command to perform the fixed length bonding operation by detecting a specified operation of the operation panel 28, for example.

The bonding device 1 receives the commands to start and stop the bonding operation through the S/S switch 71. The bonding device 1 may receive the commands to start and stop the bonding operation by detecting a specified operation of the operation panel 28, for example. A foot controller may be connected to the bonding device 1, and the bonding device 1 may control the operations of the upper feed motor 22, the lower feed motor 38, the pump motor 20, and the like based on the direction in which and amount by which a pedal of the foot controller is depressed. The bonding device 1 may use the foot controller to control the fixed length bonding operation.

As explained above, the length d1 is the length from the nozzle origin position P0 to the nozzle current position P1. The length d2 is the length from the pressure bonding point P2 to the nozzle origin position P0. The length d3 is the length from nozzle current position P1 to the pressure bonding point P2. The bonding device 1 acquires the length d1 and the length d2 and computes the length d3. The length d3 may be a value that is stored in the storage device 64 in advance. The nozzle current position P1 may be computed based on the nozzle clearance, and the length d3 may then be computed based on the computed nozzle current position P1. Instead of being the length from the nozzle current position P1 to the pressure bonding point P2, the length d3 may be the length in the feed direction of the tape C2 from the nozzle current position P1 to a position that is slightly upstream or slightly downstream from the pressure bonding point P2.

In the above-described embodiment, the lever 9 swings around the pivotal shaft 9A, and movably supports the nozzle 10. A movement mechanism of the nozzle 10 may be provided with a support member that supports the nozzle 10, for example. At this time, the support member may be capable of moving in parallel with and along the feed path R1.

The orientation in which the upper roller 12 and the lower roller 18 face each other is not limited to the up-down direction, and the upper roller 12 and the lower roller 18 may face each other in a diagonal direction.

The outer diameter of the lower roller 18 is larger than the outer diameter of the upper roller 12. The outer diameters of both the rollers 12 and 18 may be the same. The outer diameter of the lower roller 18 may be smaller than the outer diameter of the upper roller 12.

The tape guide 90 is fixed to the left side face 6A of the upper feed arm 6. It is acceptable for the bonding device 1 not to include the tape guide 90.

The lower portion of the lower feed arm 7 extends diagonally upward and to the rear. The lower feed arm 7 may extend in the vertical direction.

It is also acceptable for the bonding device 1 not to include one of the upper feed motor 22 and the lower feed motor 38. More specifically, it is acceptable for the bonding device 1 not to include one of the upper roller drive mechanism 15 and the lower roller drive mechanism.

## Claims

1. A bonding device (1) adapted to bond a first sheet onto a second sheet using an adhesive, the bonding device comprising:
an upper roller (12) adapted to come into contact with the first sheet having a narrower width than the second sheet;
a lower roller (18) facing the upper roller, the lower roller being adapted to be disposed below the first sheet, and the lower roller being adapted to press at least one of the first sheet and the second sheet against the upper roller;
a drive portion (22, 38) adapted to rotationally drive at least one of the upper roller and the lower roller;
a nozzle (10) including a discharge outlet (65), the nozzle being adapted to discharge the adhesive from the discharge outlet onto a bonding face on the opposite side of the first sheet from the upper roller side of the first sheet, and the discharge outlet being adapted to face an outer circumferential face of the upper roller;
a supply mechanism (20) adapted to supply the adhesive to the nozzle;
a first feed control portion (61) adapted to control the drive portion to cause the first sheet to be fed over a specified length in a state in which the first sheet is pressed between the upper roller and the lower roller, the specified length being a length from a position, on the outer circumferential face of the upper roller, that is opposite the discharge outlet to a pressure bonding point where the first sheet is pressed against the lower roller;
a first supply control portion (61) adapted to control the supply mechanism to discharge the adhesive from the discharge outlet in conjunction with the operating of the drive portion controlled by the first feed control portion;
a second feed control portion (61) adapted to control the drive portion to, after the first feed control portion causes the first sheet to be fed over the specified length, cause the first sheet and the second sheet to be fed in a state in which the first sheet and the second sheet are pressed between the upper roller and the lower roller; and
a second supply control portion (61) adapted to control the supply mechanism to discharge the adhesive from the discharge outlet in conjunction with the operating of the drive portion controlled by the second feed control portion.

2. The bonding device according to claim 1, further comprising:
a clearance acquisition portion (61) adapted to acquire a nozzle clearance, the nozzle clearance being a distance between the discharge outlet and a position, on the outer circumferential face of the upper roller, that is opposite the discharge outlet; and
a length computation portion (61) adapted to compute the specified length based on the nozzle clearance acquired by the clearance acquisition portion,
wherein the first feed control portion controls the drive portion based on the specified length computed by the length computation portion.

3. The bonding device according to either one of claims 1 and 2, further comprising:
an acceptance portion adapted to accept a specified operation,
wherein the first feed control portion and the first supply control portion respectively control the drive portion and the supply mechanism in a case where the acceptance portion has received the specified operation.

4. A method for controlling a bonding device (1) adapted to bond a first sheet onto a second sheet using an adhesive,
the bonding device comprising:
an upper roller (12) adapted to come into contact with the first sheet having a narrower width than the second sheet;
a lower roller (18) facing the upper roller, the lower roller being adapted to be disposed below the first sheet, and the lower roller being adapted to press at least one of the first sheet and the second sheet against the upper roller;
a drive portion (22, 38) adapted to rotationally drive at least one of the upper roller and the lower roller;
a nozzle (10) including a discharge outlet (65), the nozzle being adapted to discharge the adhesive from the discharge outlet onto a bonding face on the opposite side of the first sheet from the upper roller side of the first sheet; and
a supply mechanism (20) adapted to supply the adhesive to the nozzle, and
the method comprising:
a first feed control step of controlling the drive portion to cause the first sheet to be fed over a specified length in a state in which the first sheet is pressed between the upper roller and the lower roller, the specified length being a length from a position, on the outer circumferential face of the upper roller, that is opposite the discharge outlet to a pressure bonding point where the first sheet is pressed against the lower roller;
a first supply control step of controlling the supply mechanism to discharge the adhesive from the discharge outlet in conjunction with the operating of the drive portion in the first feed control step;
a second feed control step of controlling the drive portion to, after the first sheet is moved over the specified length in the first feed control step, cause the first sheet and the second sheet to be fed in a state in which the first sheet and the second sheet are pressed between the upper roller and the lower roller; and
a second supply control step of controlling the supply mechanism to discharge the adhesive from the discharge outlet in conjunction with the operating of the drive portion in the second feed control step.
